# EUROPÄISCHE PATENTSCHRIFT

(11) **EP 4 123 277 B1**
(45) Veröffentlichungstag und Bekanntmachung des Hinweises auf die Patenterteilung: **06.11.2024**
(21) Anmeldenummer: 21186292.5
(22) Anmeldetag: 19.07.2021
(51) Int. Cl.: G01L 3/10, G01L 25/00

(54) **DREHMOMENTMESSUNG MIT KORREKTUR EINES MAGNETISCHEN FREMDFELDS**
TORQUE MEASUREMENT WITH CORRECTION OF MAGNETIC FIELD
MESURE DE COUPLE À CORRECTION D'UN CHAMP ÉTRANGER MAGNÉTIQUE

(43) Veröffentlichungstag der Anmeldung: 25.01.2023
(73) Patentinhaber: NCTE AG, 82041 Oberhaching (DE)
(72) Erfinder: NACKE, Julian, 81377 München (DE); ECKSCHLAGER, Florian, 85521 Riemerling (DE); MAYR, Bernhard, 81549 München (DE)
(74) Vertreter: Grünecker Patent- und Rechtsanwälte PartG mbB

(56) Entgegenhaltungen:
- EP-A1- 2 799 327
- US-A1- 2010 242 626
- US-A1- 2018 231 425

## Beschreibung

### Gebiet der Erfindung

Die Erfindung betrifft ein Antriebslager, insbesondere ein Tretlager, mit einem Drehmomentsensor.

### Stand der Technik

Im Stand der Technik sind Drehmomentsensoren bekannt, die in Tretlagern bzw. Antriebslagern von Pedelecs oder E-Bikes verbaut sind. Ein Beispiel für einen solchen Drehmomentsensor, der auf dem Prinzip des inversen magnetostriktiven Effekts beruht, ist in EP 3 050 790 B1 offenbart. Dabei erzeugt eine magnetisierte Welle des Lagers in Abhängigkeit von einem anliegenden Drehmoment ein entsprechendes Magnetfeld außerhalb der Welle, das kontaktlos mit einem Magnetfeldsensor erfasst werden kann.

Die Messung von Magnetfeldänderung durch ein Drehmoment kann durch Messspulen in einer Messschaltung erfolgen, die durch das sich veränderte Magnetfeld beeinflusst werden. Diese werden berührungslos in Relation zur der magnetisierten Welle angebracht (z.B. parallel zur Drehachse) und erfassen Magnetfeldänderungen, die unter Last aufgrund der inversen Magnetostriktion auftreten. Die Magnetfeldänderung ist in der Regel direkt proportional zur äußeren Krafteinwirkung und stellt den Zusammenhang mit dem Drehmoment her. Dazu wird in der Herstellungsphase des Drehmomentsensors eine einmalige Kalibrierung durchgeführt.

Bei der Kalibrierung wird auch ein an der Messposition vorhandenes kontantes Restmagnetfeld von der magnetisierten Welle ohne anliegendes Moment durch Festsetzung der Nullstelle einer Magnetfeld-Drehmomentwert-Kurve berücksichtigt, so dass diesem Restmagnetfeld der Drehmomentwert Null zugeordnet wird. Ein selbstkompensierender magnetoelastischer Drehmomentsensor ist aus US 2010/242626 A1 bekannt.

Dieses aus dem Stand der Technik bekannte Messverfahren weist jedoch die im Folgenden genannten Nachteile auf.

Es können magnetische Störfelder auftreten, entweder dauerhaft oder nur zeitweise, die die Messung verfälschen.

Beispielsweise können Reparaturen am Pedelec/E-Bike, insbesondere am Antriebslager/Tretlager oder in der Nähe davon, dazu führen, dass magnetisierte Ersatzteile - wie etwa eine magnetische Schraube - verwendet werden, die zu einem dauerhaften zusätzlichen Magnetfeld führen, das die Messung beeinflusst und eine neue Kalibrierung erfordern würde.

Ein anderes Beispiel sind kurzfristig auftretende magnetische Stör- oder Fremdfelder, wie sie beispielsweise beim Überqueren von Induktionsschleifen im Boden oder beim Unterqueren von Hochspannungsleitungen auftreten können. Solche kurzfristig auftretenden magnetischen Stör- oder Fremdfelder können zudem innerhalb der Störphase ein wechselndes Magnetfeld erzeugen.

Auch das Erdmagnetfeld kann eine störende Magnetfeldquelle sein, sowohl konstant als auch variabel, letzteres z.B. beim Vorbeifahren an Objekten, die das Erdmagnetfeld verändern, wie etwa stehende oder fahrende Fahrzeuge.

Der Erfindung liegt die Aufgabe zugrunde, die genannten Nachteile zumindest teilweise auszuräumen.

Diese Aufgabe wird durch ein Antriebslager, insbesondere ein Tretlager, mit einem Drehmomentsensor gelöst, wie in Anspruch 1 definiert.

Auf diese Weise kann der Einfluss ein störendes Magnetfeld auf die Messung des Magnetfeldes durch den ersten Magnetfeldsensor und schließlich auf das ermittelte Drehmoment berichtigt werden. Insbesondere kann die Messschaltung eine Auswerteeinheit umfassen, die mit dem ersten und zweiten Magnetfeldsensor verbunden ist, und den Wert des Drehmoments ermittelt.

Das drehbare gelagerte Bauteil überträgt das angelegte Drehmoment, z.B. von einer Antriebsvorrichtung, die an einer Stelle mit dem Bauteil verbunden sein kann, an eine Abtriebsvorrichtung, die an einer anderen Stelle mit dem Bauteil verbunden sein kann.

Das erfindungsgemäße Antriebslager kann wie folgt weitergebildet werden.

Eine Weiterbildung besteht darin, dass die Messschaltung dazu ausgebildet sein kann, eine Korrektur des ersten Signals unter Verwendung des zweiten Signals durchzuführen, um den Wert des anliegenden Drehmoments zu ermitteln; oder dass die Messschaltung dazu ausgebildet sein kann, eine Korrektur eines aus dem ersten Signal ermittelten vorläufigen Werts des Drehmoments unter Verwendung des zweiten Signals durchzuführen, um den Wert des anliegenden Drehmoments zu ermitteln.

Die Signale können also direkt miteinander verglichen werden und eine korrigiertes Ausgabesignal kann zur Ermittlung des anliegenden Drehmoments verwendet werden, oder es kann ein vorläufiger Drehmomentwert ermittelt werden, der unter Verwendung eines Drehmomentkorrekturwerts entsprechend dem zweiten Signal korrigiert wird, und dann als tatsächlicher Drehmomentwert ausgegeben wird.

Eine andere Weiterbildung besteht darin, dass das erste Signal eine erste Messgröße repräsentiert, die proportional zum Gesamtmagnetfeld ist, und das zweite Signal eine zweite Messgröße repräsentiert, die proportional zum Fremdmagnetfeld ist.

Eine solche Proportionalität vereinfacht die Verarbeitung der Signale, um einen Wert des Drehmoments zu ermitteln.

Dies kann dahingehend weitergebildet werden, dass die Messschaltung dazu ausgebildet sein kann, einen Fehler durch das Fremdfeld in dem ersten Signal mittels dem zweiten Signal zu kompensieren, oder dass die Messschaltung dazu ausgebildet sein kann, einen Fehler durch das Fremdfeld in der ersten Messgröße mittels der zweiten Messgröße zu kompensieren.

Gemäß der beanspruchten Erfindung erfasst der zweite Magnetfeldsensor das Fremdfeld in einem in Bezug auf das Drehmoment unbelasteten Zustand des Bauteils.

Das hat den Vorteil, dass der zweite Magnetfeldsensor nicht vom Magnetfeld des magnetostriktiven Materials des Bauteils beeinflusst wird während das Fremdmagnetfeld erfasst wird, da kein Drehmoment anliegt, das eine Veränderung des Magnetfelds an der ersten Position bewirken könnte. Im Falle einer Welle als das Bauteil in einem Tretlager eines Pedelecs oder E-Bikes sind solche unbelasteten Zustände beispielweise im oberen und unteren Totpunkt der Pedale gegeben.

Gemäß der beanspruchten Erfindung wird ein dem erfassten Fremdfeld entsprechender Messwert bis zum nächsten unbelasteten Zustand zur Ermittlung des Drehmoments verwendet.

Eine andere Weiterbildung besteht darin, dass der zweite Magnetfeldsensor dazu ausgebildet sein kann, ein zeitlich variables Fremdfeld zu erfassen.

Auf diese Weise können nicht nur konstante Fremdmagnetfelder berücksichtigt werden, sondern auch Fremdfelder, die sich mit der Zeit verändern, so dass eine jeweilige Korrektur in Echtzeit erfolgen kann.

Dabei kann das zeitlich variable Fremdfeld räumlich homogen sein, derart, dass zu einem bestimmten Zeitpunkt an der ersten und der zweiten Position die Stärke und Richtung des Fremdmagnetfeldes gleich ist.

Gemäß einer anderen Weiterbildung kann der zweite Magnetfeldsensor dazu ausgebildet sein, einen Gradienten des Fremdmagnetfelds zu erfassen, und die Messschaltung kann dazu ausgebildet sein, aufgrund des Gradienten die Größe des Fremdmagnetfelds an der ersten Position zu bestimmen.

Eine andere Weiterbildung besteht darin, dass der zweite Magnetfeldsensor genau einen AMR-Sensor umfasst, der auf dem anisotropen magneto-resistiven Effekt (AMR-Effekt) beruhen. Mit einem AMR-Sensor kann das Fremdmagnetfeld sowohl im Betrag, der Richtung als auch in Bezug auf einen Gradienten erfasst werden. Insbesondere genügt dazu genau ein AMR-Sensor.

Eine andere Weiterbildung besteht darin, dass das Bauteil eine Antriebswelle ist. Das ist z.B. für ein Tretlager vorteilhaft, da die ohnehin vorhandene Welle auch zur Drehmomentmessung verwendet werden kann, indem sie zumindest teilweise magnetisiert wird.

Das Antriebslager kann ein Tretlager sein.

Die Erfindung betrifft auch eine Vorrichtung, die ein erfindungsgemäßes Antriebslager oder eine dessen Weiterbildungen umfasst, wobei die Vorrichtung ein Pedelec oder ein E-Bike ist.

Gemäß einer anderen Weiterbildung kann die Messschaltung dazu ausgebildet sein, den Wert des anliegenden Drehmoments zu ermitteln, indem eine Korrektur in Bezug auf eine nach einem initialen Kalibrierungsvorgang der Messschaltung an der Vorrichtung angebrachte Komponente mit einem Fremdmagnetfeld durchgeführt wird.

Eine andere Weiterbildung besteht darin, dass die Messschaltung dazu ausgebildet ist, bei der Ermittlung des Werts des anliegenden Drehmoments eine Korrektur aufgrund eines durch eine Stromleitung erzeugten Fremdmagnetfelds durchzuführen, und/oder eine Korrektur aufgrund eines durch eine Induktionsschleife in einer Fahrbahn erzeugten Fremdmagnetfelds durchzuführen, und/oder eine Korrektur aufgrund eines durch das Erdmagnetfeld erzeugten Fremdmagnetfelds durchzuführen.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen.

### Kurzbeschreibung der Zeichnungen

- Fig. 1: zeigt eine erste Ausführungsform des erfindungsgemäßen Antriebslagers.
- Fig. 2: zeigt eine zweite Ausführungsform des erfindungsgemäßen Antriebslagers.

### Ausführungsformen

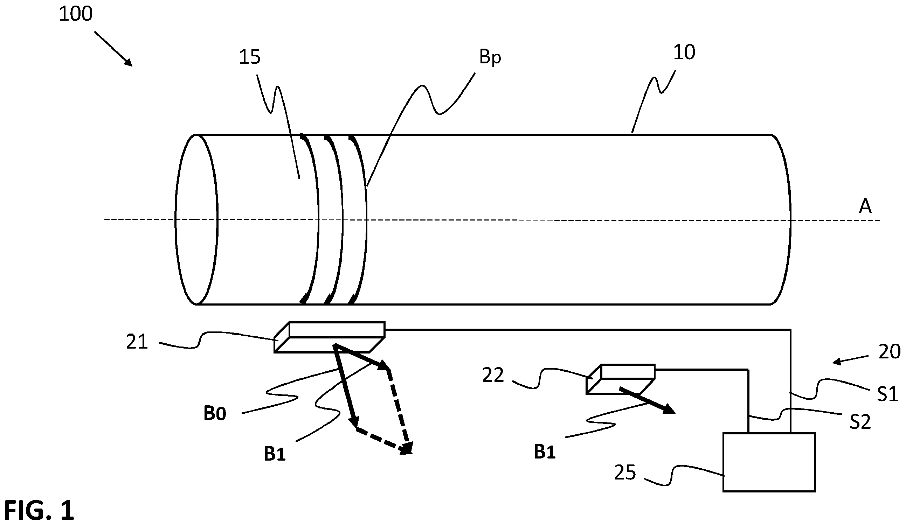

Figur 1 zeigt eine erste Ausführungsform 100 des erfindungsgemäßen Antriebslagers.

Das erfindungsgemäße Antriebslager 100 umfasst ein um eine Drehachse A drehbar gelagertes Bauteil 10, in dieser Ausführungsform in Form einer Welle 10, das magnetisiertes, magnetostriktives Material 15 umfasst; wobei an das Bauteil 10 ein Drehmoment anlegbar ist und das magnetostriktive, magnetisierte Material 15 dazu ausgebildet ist, ein von dem anliegenden Drehmoment abhängiges Magnetfeld B₀ an einer ersten Position außerhalb des Bauteils 10 zu erzeugen; und eine Messschaltung 20. Das magnetostriktive Material 15 ist in einem Bereich des Bauteils mit einer permanenten Magnetiesierung Bₚ versehen. Diese kann beispielsweise durch eine initiale Magnetisierung mittels Strompulsen durch das Bauteil 10 erzielt werden.

Die Messschaltung 20 umfasst einen ersten Magnetfeldsensor 21 zur Erfassung einer Komponente eines Gesamtmagnetfelds B₀ + Bi an der ersten Position, wobei das Gesamtmagnetfeld das vom magnetostriktiven, magnetisierten Material erzeugte Magnetfeld B₀ und ein Fremdmagnetfeld B, umfasst, und wobei der erste Magnetfeldsensor 21 dazu ausgebildet ist, ein von der erfassten Komponente des Gesamtmagnetfelds abhängiges erstes Signal S1 auszugeben; und einen zweiten Magnetfeldsensor 22 zur Erfassung wenigstens einer Komponente des Fremdmagnetfelds B, an einer zweiten Position, die von der ersten Position verschieden ist, wobei der zweite Magnetfeldsensor 22 dazu ausgebildet ist, ein vom erfassten Fremdmagnetfeld B₁ abhängiges zweites Signal S2 auszugeben; wobei die Messschaltung 20 dazu ausgebildet ist, unter Verwendung des ersten und des zweiten Signals S1, S2 einen Wert des anliegenden Drehmoments zu ermitteln.

Bei einer anfänglichen (und in der Regel einmaligen) Kalibrierung wird auch ein an der ersten Position (Messposition des ersten Magnetfeldsensors 21) vorhandenes kontantes Restmagnetfeld der magnetisierten Welle ohne anliegendes Drehmoment durch Festsetzung der Nullstelle einer Magnetfeld-Drehmomentwert-Kurve berücksichtigt, so dass diesem Restmagnetfeld an der ersten Position (bzw. der vom ersten Magnetfeldsensor 21 erfassten Komponente davon) der Drehmomentwert Null zugeordnet wird.

Der erste Magnetfeldsensor 21 kann beispielsweise eine oder mehrere Messspulen aufweisen, die eine Magnetfeldkomponente parallel zur Ache A erfassen. Alternativ dazu oder zusätzlich kann eine Magnetfeldkomponente senkrecht zur Ache A und/oder eine andere Richtung des Magnetfelds und/oder der absolute Betrag des Magnetfelds erfasst werden.

Der zweite Magnetfeldsensor 22 kann beispielsweise ein AMR-Sensor sein, des Wirkungsweise auf dem anisotropen magneto-resistiven Effekt beruht.

Die Messschaltung 20 verarbeitetet die Signale S1 und S2 von den Magnetfeldsensoren, um eine Korrektur des durch das Fremdfeld verursachten Abweichung vom tatsächlichen Wert des anliegenden Drehmoments durchzuführen. Insbesondere kann die Messschaltung 20 eine Auswerteeinheit 25 umfassen, die einen korrigierten Wert des Drehmoments ermittelt.

Der zweite Magnetfeldsensor 22 erfasst das Fremdfeld in einem in Bezug auf das Drehmoment unbelasteten Zustand des Bauteils. Auf diese Weise wird der zweite Magnetfeldsensor 22 nicht vom Magnetfeld des magnetostriktiven Materials des Bauteils beeinflusst (beispielsweise durch ein an der zweiten Position wirkendes Magnetfeld vom magnetisierten Bereich des Bauteils 10 mit dem magnetotriktiven Material) während das Fremdmagnetfeld erfasst wird. Wenn kein Drehmoment anliegt, das eine Veränderung des Magnetfelds an der ersten und zweiten Position bewirken könnte, ist somit eine genaue Erfassung des Fremdfeldes möglich. Im Falle einer Welle als das Bauteil in einem Tretlager eines Pedelecs oder E-Bikes sind solche unbelasteten Zustände beispielweise im oberen und unteren Totpunkt der Pedale gegeben. Anderenfalls ist eine Erfassung des Fremdmagnetfeldes dennoch möglich, wenn die zweite Position hinreichend von der ersten Position entfernt ist (größer oder gleich einem vorbestimmten Abstand), so dass der Einfluss des Magnetfeldes von dem Bauteil 10 an der zweiten Position auch bei einem anliegenden Drehmoment hinreichend gering ist.

Der entsprechende Messwert des Fremdfeldes wird bis zum nächsten unbelasteten Zustand zur Ermittlung des Drehmoments verwendet.

Das Fremdfeld kann zeitlich variabel sein. Eine Korrektur der Drehmomentmessung erfolgt dann ich Echtzeit. Auf diese Weise können nicht nur zeitlich konstante Fremdmagnetfelder berücksichtigt werden, sondern auch Fremdmagnetfelder, die sich mit der Zeit verändern.

Im Falle eines Antriebslagers in einem E-Bike können während der Fahrt zeitlich variable Fremdfeldquellen relevant sein. Die zeitliche Änderung kann sich dabei zum einen aufgrund der Vorbeifahrt an der Fremdfeldquelle und/oder zum anderen durch eine zeitliche Variabilität der Quelle des Fremdmagnetfeldes selbst ergeben. Beispielsweise kann die Messschaltung dazu ausgebildet sein, bei der Ermittlung des Werts des anliegenden Drehmoments eine Korrektur aufgrund eines durch eine Stromleitung erzeugten Fremdmagnetfelds durchzuführen (50Hz Wechselfeld), und/oder eine Korrektur aufgrund eines durch eine Induktionsschleife in einer Fahrbahn erzeugten Fremdmagnetfelds durchzuführen, und/oder eine Korrektur aufgrund eines durch das Erdmagnetfeld erzeugten Fremdmagnetfelds durchzuführen.

Dabei ist das zeitlich variable Fremdmagnetfeld üblicherweise räumlich homogen, so dass zu einem bestimmten Zeitpunkt an der ersten und der zweiten Position die Stärke und Richtung des Fremdmagnetfeldes gleich ist.

Jedoch kann der zweite Magnetfeldsensor dazu ausgebildet sein, einen Gradienten des Fremdmagnetfelds zu erfassen, und die Messschaltung kann dazu ausgebildet sein, aufgrund des Gradienten die Größe des Fremdmagnetfelds an der ersten Position zu bestimmen. Auf diese Weise kann eine Veränderung durch den Gradienten von der zweite zur ersten Position berücksichtigt werden, indem beispielsweise mit dem erfassten Gradienten eine Extrapolation der der Größe des Fremdmagnetfeldes an der ersten Position durchgeführt wird, wobei eine solche Berechnung insbesondere in der Auswerteeinheit 25 erfolgen kann.

Ein Beispiel für ein zeitlich konstantes Fremdmagnetfeld ist das Feld eines Ersatzteils (z.B. magnetische Schraube), das bei einer Reparatur verwendet wird, also ein Störmagnetfeld, das nach der ursprünglichen Kalibrierung auftritt.

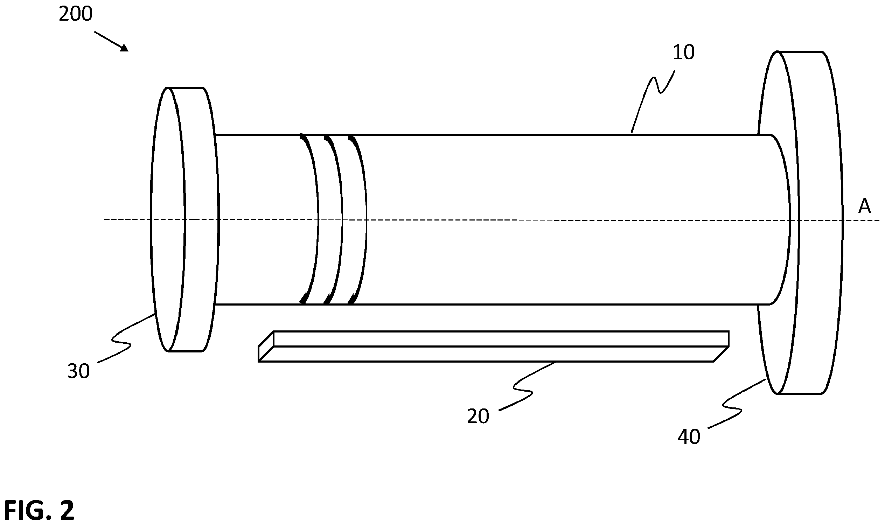

Figur 2 zeigt eine zweite Ausführungsform 200 des erfindungsgemäßen Antriebslagers.

Das Antriebslager 200 dieser zweiten Ausführungsform entspricht jenem der ersten Ausführungsform gemäß Figur 1, wobei die Messschaltung 20 hier nur schematisch angedeutet ist. Zusätzlich sind hier jedoch Antriebsmittel 30 und Abtriebsmittel 40 dargestellt.

Das Antriebsmittel 30 ist z.B. mit einem elektrischen Antriebsmotor eine E-Bikes verbunden oder ist Teil davon. Das Abtriebsmittel 40 kann eine Kettenblattträger oder ein Kettenblatt sein, das wiederum über eine Kette eine Rad antreibt.

Die dargestellten Ausführungsformen sind lediglich beispielhaft und der vollständige Umfang der vorliegenden Erfindung wird durch die Ansprüche definiert.

## Patentansprüche

1. Antriebslager (100, 200), insbesondere ein Tretlager, umfassend:
ein um eine Drehachse (A) drehbar gelagertes Bauteil (10), das magnetisiertes, magnetostriktives Material (15) umfasst;
wobei an das Bauteil (10) ein Drehmoment anlegbar ist und das magnetostriktive, magnetisierte Material (15) dazu ausgebildet ist, ein von dem anliegenden Drehmoment abhängiges Magnetfeld (B0) an einer ersten Position außerhalb des Bauteils (10) zu erzeugen; und
eine Messschaltung (20), umfassend:
einen ersten Magnetfeldsensor (21) zur Erfassung wenigstens einer Komponente eines Gesamtmagnetfelds an der ersten Position, wobei das Gesamtmagnetfeld das vom magnetostriktiven, magnetisierten Material (15) erzeugte Magnetfeld (B0) und ein Fremdmagnetfeld (B1) umfasst, und wobei der erste Magnetfeldsensor (21) dazu ausgebildet ist, ein von der wenigstens einen erfassten Komponente des Gesamtmagnetfelds abhängiges erstes Signal (S1) auszugeben; und
einen zweiten Magnetfeldsensor (22) zur Erfassung wenigstens einer Komponente des Fremdmagnetfelds (B1) an einer zweiten Position, die von der ersten Position verschieden ist, wobei der zweite Magnetfeldsensor (22) dazu ausgebildet ist, ein von der wenigstens einen erfassten Komponente des Fremdmagnetfelds (B1) abhängiges zweites Signal (S2) auszugeben;
wobei die Messschaltung (20) dazu ausgebildet ist, unter Verwendung des ersten und des
zweiten Signals einen Wert des anliegenden Drehmoments zu ermitteln,
wobei der zweite Magnetfeldsensor (22) das Fremdfeld in einem in Bezug auf das Drehmoment unbelasteten Zustand des Bauteils erfasst,
**dadurch gekennzeichnet, dass** ein dem erfassten Fremdfeld entsprechender Messwert bis zum nächsten unbelasteten Zustand zur Ermittlung des Drehmoments verwendet wird."

2. Antriebslager nach Anspruch 1, wobei die Messschaltung dazu ausgebildet ist, eine Korrektur des ersten Signals unter Verwendung des zweiten Signals durchzuführen, um den Wert des anliegenden Drehmoments zu ermitteln; oder wobei die Messschaltung dazu ausgebildet ist, eine Korrektur eines aus dem ersten Signal ermittelten vorläufigen Werts des Drehmoments unter Verwendung des zweiten Signals durchzuführen, um den Wert des anliegenden Drehmoments zu ermitteln.

3. Antriebslager nach Anspruch 1 oder 2, wobei das erste Signal eine erste Messgröße repräsentiert, die proportional zum Gesamtmagnetfeld ist, und das zweite Signal eine zweite Messgröße repräsentiert, die proportional zum Fremdmagnetfeld ist.

4. Antriebslager nach Anspruch 3, wobei die Messschaltung dazu ausgebildet ist, einen Fehler durch das Fremdfeld in dem ersten Signal mittels dem zweiten Signal zu kompensieren, oder wobei die Messschaltung dazu ausgebildet ist, einen Fehler durch das Fremdfeld in der ersten Messgröße mittels der zweiten Messgröße zu kompensieren.

5. Antriebslager nach einem der Ansprüche 1 bis 4, wobei der zweite Magnetfeldsensor dazu ausgebildet ist, ein zeitlich variables Fremdfeld zu erfassen.

6. Antriebslager nach Anspruch 5, wobei das zeitlich variable Fremdfeld räumlich homogen ist, derart, dass zu einem bestimmten Zeitpunkt an der ersten und der zweiten Position die Stärke und Richtung des Fremdmagnetfeldes gleich ist.

7. Antriebslager nach einem der Ansprüche 1 bis 5, wobei der zweite Magnetfeldsensor dazu ausgebildet ist, einen Gradienten des Fremdmagnetfelds zu erfassen, und wobei die Messschaltung dazu ausgebildet ist, aufgrund des Gradienten die Größe des Fremdmagnetfelds an der ersten Position zu bestimmen.

8. Antriebslager nach einem der Ansprüche 1 bis 7, wobei der zweite Magnetfeldsensor genau einen AMR-Sensor umfasst.

9. Antriebslager nach einem der Ansprüche 1 bis 8, wobei das Bauteil eine Antriebswelle ist.

10. Antriebslager nach einem der Ansprüche 1 bis 9, wobei das Antriebslager ein Tretlager ist.

11. Vorrichtung, umfassend ein Antriebslager nach einem der Ansprüche 1 bis 10, wobei die Vorrichtung ein Pedelec oder ein E-Bike ist.

12. Vorrichtung nach einem der Ansprüche 1 bis 11 in Kombination mit Anspruch 2, wobei die Messschaltung dazu ausgebildet ist, den Wert des anliegenden Drehmoments zu ermitteln, indem eine Korrektur in Bezug auf eine nach einem initialen Kalibrierungsvorgang der Messschaltung an der Vorrichtung angebrachte Komponente mit einem Fremdmagnetfeld durchgeführt wird.

13. Vorrichtung nach einem der Ansprüche 1 bis 12 in Kombination mit Anspruch 2, wobei die Messschaltung dazu ausgebildet ist, bei der Ermittlung des Werts des anliegenden Drehmoments eine Korrektur aufgrund eines durch eine Stromleitung erzeugten Fremdmagnetfelds durchzuführen, und/oder eine Korrektur aufgrund eines durch eine Induktionsschleife in einer Fahrbahn erzeugten Fremdmagnetfelds durchzuführen, und/oder eine Korrektur aufgrund eines durch das Erdmagnetfeld erzeugten Fremdmagnetfelds durchzuführen.

## Claims

1. Drive bearing (100, 200) in particular a bottom bracket, comprising:
an element (10) which is mounted to be rotatable about an axis of rotation (A) and which comprises magnetized magnetostrictive material (15);
wherein a torque can be applied to said element (10) and said magnetostrictive magnetized material (15) is formed to generate at a first position outside said element a magnetic field (B0) as a function of the torque applied; and
a measuring circuit (20), comprising
a first magnetic field sensor (21) for detecting at least one component of a total magnetic field at said first position, wherein the total magnetic field comprises the magnetic field (B0) generated by said magnetostrictive magnetized material (15) and an external magnetic field (B1), and wherein said first magnetic field sensor (21) is configured to output a first signal (S1) as a function of said at least one detected component of the total magnetic field; and
a second magnetic field sensor (22) for detecting at least one component of the external magnetic field (B1) at a second position, which differs from said first position, wherein said second magnetic field sensor (22) is configured to output a second signal (S2) as a function of said at least one detected component of the external magnetic field (B1);
wherein said measuring circuit (20) is configured to determine a value of the applied torque using said first and said second signal,
wherein the second magnetic field sensor (22) detects the external field when said element is in a state that is unloaded in terms of the torque,
**characterized in that** a measured value corresponding to the detected external magnetic field is used to determine the torque until the next unloaded state.

2. Drive bearing according to claim 1, wherein said measuring circuit is configured to carry out a correction of said first signal using said second signal for determining the value of the torque applied; or wherein said measuring circuit is configured to carry out a correction of a preliminary value of the determined torque from said first signal using said second signal for determining the value of the torque applied.

3. Drive bearing according to claim 1 or 2, wherein said first signal represents a first measured variable that is proportional to the total magnetic field, and said second signal represents a second measured variable that is proportional to the external magnetic field.

4. Drive bearing according to claim 3, wherein said measuring circuit is configured to compensate for an error caused by the external magnetic field in said first signal using said second signal, or wherein said measuring circuit is configured to compensate for an error caused by the external magnetic field in said first measured variable using said second measured variable.

5. Drive bearing according to one of the claims 1 to 4, wherein said second magnetic field sensor is configured to detect an external magnetic field that is variable over time.

6. Drive bearing according to claim 5, wherein said external magnetic field that is variable over time is spatially homogeneous in such a way that the strength and direction of the external magnetic field at a specific point in time is the same at the first and the second position.

7. Drive bearing according to one of the claims 1 to 5, wherein said second magnetic field sensor is configured to detect a gradient of the external magnetic field, and said measuring circuit is configured to determine the size of the external magnetic field at the first position as a function of said gradient.

8. Drive bearing according to one of the claims 1 to 7, wherein said second magnetic field sensor comprises exactly one AMR sensor.

9. Drive bearing according to one of the claims 1 to 8, wherein said element is a drive shaft.

10. Drive bearing according to one of the claims 1 to 9, wherein said drive bearing is a bottom bracket.

11. Device comprising a drive bearing according to one of the claims 1 to 10, wherein said device is a pedelec or an e-bike.

12. Device according to one of the claims 1 to 11 in combination with claim 2, wherein said measuring circuit is configured to determine the value of the torque applied by carrying out a correction with respect to a component with an external magnetic field that has been attached to said device after an initial calibration process of said measuring circuit.

13. Device according to one of claims 1 to 12 in combination with claim 2, wherein said measuring circuit is configured to carry out a correction due to an external magnetic field generated by a power line when determining the value of the torque applied, and/or to carry out a correction due to an external magnetic field generated by an induction loop in a roadway, and/or to carry out a correction due to an external magnetic field generated by the earth's magnetic then field.

## Revendications

1. Palier d'entraînement (100, 200), en particulier palier de pédalier, comprenant :
un composant (10) monté de manière rotative autour d'un axe de rotation (A) et comprenant un matériau magnétostrictif magnétisé (15) ;
dans lequel un couple peut être appliqué au composant (10) et le matériau magnétostrictif magnétisé (15) est conçu pour générer un champ magnétique (BO) qui dépend du couple appliqué, à une première position à l'extérieur du composant (10) ; et
un circuit de mesure (20), comprenant :
un premier capteur de champ magnétique (21) pour détecter au moins une composante d'un champ magnétique global à la première position, dans lequel le champ magnétique global comprend le champ magnétique (BO) généré par le matériau magnétostrictif magnétisé (15) et un champ magnétique externe (B1), et dans lequel le premier capteur de champ magnétique (21) est conçu pour émettre un premier signal (S1) qui dépend de ladite au moins une composante détectée du champ magnétique global ; et
un deuxième capteur de champ magnétique (22) pour détecter au moins une composante du champ magnétique externe (B1) à une deuxième position différente de la première position, dans lequel le deuxième capteur de champ magnétique (22) est conçu pour émettre un deuxième signal (S2) qui dépend de ladite au moins une composante détectée du champ magnétique externe (B1) ;
dans lequel le circuit de mesure (20) est conçu pour déterminer une valeur du couple appliqué à l'aide des premier et deuxième signaux,
dans lequel le deuxième capteur de champ magnétique (22) détecte le champ externe dans un état où le composant n'est pas sollicité par le couple,
**caractérisé en ce qu'**une valeur de mesure correspondant au champ externe détecté est utilisée pour déterminer le couple jusqu'au prochain état non sollicité.

2. Palier d'entraînement selon la revendication 1, dans lequel le circuit de mesure est conçu pour effectuer une correction du premier signal à l'aide du deuxième signal afin de déterminer la valeur du couple appliqué ; ou dans lequel le circuit de mesure est conçu pour effectuer une correction d'une valeur préliminaire du couple déterminée à partir du premier signal à l'aide du deuxième signal afin de déterminer la valeur du couple appliqué.

3. Palier d'entraînement selon la revendication 1 ou 2, dans lequel le premier signal représente une première grandeur de mesure qui est proportionnelle au champ magnétique global, et le deuxième signal représente une deuxième grandeur de mesure qui est proportionnelle au champ magnétique externe.

4. Palier d'entraînement selon la revendication 3, dans lequel le circuit de mesure est conçu pour compenser une erreur due au champ externe dans le premier signal à l'aide du deuxième signal, ou dans lequel le circuit de mesure est conçu pour compenser une erreur due au champ externe dans la première grandeur de mesure à l'aide de la deuxième grandeur de mesure.

5. Palier d'entraînement selon l'une des revendications 1 à 4, dans lequel le deuxième capteur de champ magnétique est conçu pour détecter un champ extérieur variable dans le temps.

6. Palier d'entraînement selon la revendication 5, dans lequel le champ externe variable dans le temps est spatialement homogène, de telle sorte qu'à un certain instant déterminé aux première et deuxième positions, l'intensité et la direction du champ magnétique externe sont identiques.

7. Palier d'entraînement selon l'une des revendications 1 à 5, dans lequel le deuxième capteur de champ magnétique est conçu pour détecter un gradient du champ magnétique externe, et dans lequel le circuit de mesure est conçu pour déterminer la grandeur du champ magnétique externe à la première position en fonction du gradient.

8. Palier d'entraînement selon l'une des revendications 1 à 7, dans lequel le deuxième capteur de champ magnétique comprend précisément un capteur AMR.

9. Palier d'entraînement selon l'une des revendications 1 à 8, dans lequel le composant est un arbre d'entraînement.

10. Palier d'entraînement selon l'une des revendications 1 à 9, dans lequel le palier d'entraînement est un palier de pédalier.

11. Dispositif comprenant un palier d'entraînement selon l'une des revendications 1 à 10, dans lequel le dispositif est un vélo à assistance électrique ou un vélo électrique.

12. Dispositif selon l'une des revendications 1 à 11 en combinaison avec la revendication 2, dans lequel le circuit de mesure est conçu pour déterminer la valeur du couple appliqué en effectuant une correction par rapport à une composante appliquée au dispositif après un processus d'étalonnage initial du circuit de mesure avec un champ magnétique externe.

13. Dispositif selon l'une des revendications 1 à 12 en combinaison avec la revendication 2, dans lequel le circuit de mesure est conçu pour effectuer une correction basée sur un champ magnétique externe généré par une ligne électrique lors de la détermination de la valeur du couple appliqué, et/ou pour effectuer une correction sur la base d'un champ magnétique externe généré dans une chaussée par une boucle d'induction, et/ou pour effectuer une correction sur la base d'un champ magnétique externe généré par le champ magnétique terrestre.
